# EUROPEAN PATENT APPLICATION

(11) **EP 4 732 663 A1**
(43) Date of publication of application: **29.04.2026**
(21) Application number: 25211148.9
(22) Date of filing: 24.10.2025
(51) Int. Cl.: A01G 23/083, A01G 23/095

(54) **HARVESTING TOOL AND METHOD OF REMOTE HARVESTING OF WHOLE TREES**

(30) Priority: 24.10.2024 SE 2451056
(71) Applicant: Dahlbäck, Gunnar, 582 20 Linköping (SE)
(72) Inventor: Dahlbäck, Gunnar, 582 20 Linköping (SE)
(74) Representative: Zacco Sweden AB

(57) **Abstract**

A harvesting tool (1) for harvesting of a whole tree (10), said tool comprising a first portion (2) and a second portion (3), wherein the first portion (2), when in use, is positioned above the second portion (3) and in relation to a vertical axis (V), and wherein the first portion (2) comprises a first actuator (4) and gripping and lifting device (5), and wherein the second portion (3) comprises a second actuator (6) and a cutting device (7), and wherein said first portion (2) and said second portion (3) are rotatable in relation to the vertical axis (V) from a first position (F) to a second position (S). The disclosure also relates to a method for harvesting using the tool and a system comprising the tool and an aerial vehicle (20).

## Description

### TECHNICAL FIELD

The disclosure relates generally to a harvesting tool for trees. In particular aspects, the disclosure relates to a harvesting tool and a method of remote harvesting of trees. The disclosure can be applied to harvest of whole trees which have not previously been de-limbed.

### BACKGROUND

Today there is an increasing concern that excessive felling of forests, driven by logging, agriculture, and urban expansion, might severely undermine their ability to capture carbon, especially in the context of climate change. As trees are removed, the carbon they store is released back into the atmosphere, contributing to higher CO2 levels. Additionally, deforestation weakens the forest's natural resilience against climate-related stressors like drought, pests, and wildfires, which further diminish their carbon capture capacity. With fewer trees, ecosystems struggle to regenerate, and the loss of forest cover exacerbates climate change, creating a vicious cycle where rising temperatures and degraded forests result in less effective carbon absorption over time. Implementing sustainable logging methods, such as selective harvesting and reduced-impact logging, can minimize damage to the forest's carbon storage potential.

Traditional tree harvesting is also conducted by personnel and equipment being based on the ground, which requires that permanent driveways for the transport of timber out of the forest must be built, as well as imparting other permanent damages to the environment which may affect in particular soil fungi, hanging lichens, mosses and forest birds. Further to this, some more remote or steep forest areas may be difficult to reach by land.

Therefore, regardless of whether a clear-cut or a more selective forestry management is conducted, it is desirable to be able to cut and transport harvested trees in a more environmentally friendly manner, but also in a more ground independent manner.

In this respect remote or automatic harvest of trees using aerial vehicles, such as helicopters and unmanned drones or multi-copters has been suggested. So called heli-logging has been demonstrated to be considerably more environmentally friendly. Heli-logging is however significantly more expensive than traditional ground-based logging due to the costs associated with helicopter fuel, maintenance, and specialized equipment, making it less economically viable for large-scale operations. Harvesting of de-limbed tree stems using UAVs has been partially demonstrated, but is not yet a feasible solution due to the weight of the trees as well as the weight of the harvesting equipment needed.

Another well-known problem when harvesting trees is root rotting, which causes severe losses off wood for forest owners annually. Root rot is caused by a fungal infection, spreading from cut stubs to adjacent trees, and leads to loss of quality of the wood and lower growth.

According some regulations, at least a fifth of the branches and the top portion must be left at the site, in order to preserve both nutrients and neutralize acid in the soil. Therefore, it is a requirement by some forest institutions that nutrients and acid neutralizing agents are to be brought back to the site of felling, if all or a majority of the branches and top portion of the tree are also removed from the site of felling.

Therefore there is a need for a new harvesting tool, in particular for a more selective and ground independent harvesting of whole trees, without previous de-limbing of the stem or trunk, which also takes into consideration the requirements with regards to nutrients and protection from root rotting.

### SUMMARY

According to a first aspect of the disclosure a harvesting tool for harvesting of a whole tree, said tool comprising a first portion and a second portion, wherein the first portion, when in use, is positioned above the second portion and in relation to a vertical axis, and wherein the first portion comprises a first actuator and gripping device, and wherein the second portion comprises a second actuator and a cutting device, and wherein said first portion and said second portion are rotatable in relation to the vertical axis from a first position to a second position.

The harvesting tool according to the present disclosure allows for a more selective and ground independent forestry management, which may lead to a more sustainable forestry. That the harvesting tool is equipped with two separate and rotatable portions for gripping and transporting the tree, and a cutting the tree allows for the tool to be able to grip and hold the tree at a distance from the cutting tool and therefore provides an efficient way of harvesting whole trees. Since the harvesting tool is further configured to be rotatable it can be positioned adjacent to or juxtaposed to the whole tree without having to de-limb or remove any branches of the tree, i.e. it can be positioned when it is in a first folded state. The first portion is also configured to be able to grip and hold the whole tree during both the cutting of the tree and during the subsequent transportation of the tree from the site of felling.

In one example, the first portion and said second portion are adapted to be controlled to rotate to about 90° from a first vertical position to a second horizontal position.

This allows for the harvesting tool to be lowered from for instance a hovering aerial vehicle through the branches of the tree to an operative position, where the first and second portions are positioned horizontally, or folded out state, in relation to a vertical axis. The first and second portions may be connected to each other, or be operatively connected.

The first portion and second portion may be attached to a wire. The wire, or rope, may in its turn be attached to an overhead aerial vehicle, such as a hovering aerial vehicle, or a sky logging cable.

The first portion and second portion may, preferably, be arranged at a distance from each other, and be arranged along said wire or rope. This distance is to be seen in a vertical direction when the tool is in use.

In one, preferred, example, the distance may be adjustable. This allows for the first and second portions to be positioned at their respective gripping and cutting positions independently from each other, as well in relation to the height of the tree to be cut.

The first portion and/or said second portion may further comprise a device configured for spreading of replacement nutrients. This allows for an effective way of providing the replacement nutrients required when removing the whole tree from the site of felling, which further increases the sustainability of forestry.

The second portion may further comprise a device configured for spreading of a stump protection agent. This allows for an effective way of preventing the development of root rot. According to a second aspect there is provided a method for harvesting a whole tree comprising: providing a harvesting tool according to the first aspect, controlling the harvesting tool to a position juxtaposed to a tree along a direction parallel to a vertical axis, controlling the first portion of the harvesting tool to a gripping position; controlling the second portion of the harvesting tool to a cutting position; controlling a gripping device of the first portion from a first position to a second position, controlling a cutting device of the second portion from a first position to a second position; controlling the gripping device to grip and hold around the stem of the tree, controlling the cutting device to cut the stem.

The inventive method allows for remote, ground-independent harvesting of whole trees and a more selective forestry management. The present method may also provide a more effective forest management, or even clear-cut forestry.

The method may, in one example further comprise controlling an aerial vehicle to repeatedly: delivering the harvesting tool to a site of felling; maneuvering the harvesting tool to a position juxtaposed to a tree; transporting a felled tree (10) from the site of felling to a process site.

In one preferred example, the method further includes spreading any one of replacement nutrients at the site of felling and applying stump protection agent to a tree stump, or a combination thereof. By replenishing nutrients, and preventing diseases, the method of the present disclosure may lead to several positive effects on forest regeneration and ecosystem health. Nutrient replenishment, through organic matter or fertilizers, improves soil fertility, promoting faster and healthier growth of newly planted trees, which accelerates forest recovery and carbon capture. Adding nutrients helps restore the soil's organic content, improving its structure and water retention capacity. This reduces soil erosion and enhances resilience against extreme weather conditions, supporting long-term forest stability. Nutrient-rich soils support a wider range of plant species, fostering biodiversity. A diverse plant community can attract various wildlife, helping to restore the ecological balance of the forest. According to the method of the second aspect, the said first portion and said second portion may be controlled to rotate to about 90° from the first vertical position to the second horizontal position. The first vertical position is preferable a position in which the first an second portions are folded. The second horizontal position is thus a position where the first and second portions are in an operational or protracted position, or at least where the gripping device and cutting device are positioned such that they can be extended or protracted towards the tree.

According to a third aspect there is provided a system for harvesting a whole tree comprising an aerial vehicle, a harvesting tool according to the first aspect connected to said aerial vehicle and a control unit configured to control any one of said aerial vehicle and said harvesting tool.

In one example, the system may further comprise anyone of a device configured for spreading of replacement nutrients and a a device configured for spreading of a stump protection agent, or a combination thereof.

### BRIEF DESCRIPTION OF THE DRAWINGS

Examples are described in more detail below with reference to the appended drawings.
**Fig. 1** is an exemplary harvesting tool according to an example.
**Fig. 2** is an exemplary harvesting tool according to an example.

### DETAILED DESCRIPTION

The detailed description set forth below provides information and examples of the disclosed technology with sufficient detail to enable those skilled in the art to practice the disclosure. Modern forestry often relies on large-scale clear-cutting and monoculture plantations, which can significantly reduce biodiversity by destroying habitats and disrupting ecosystems. Intensive logging can lead to soil erosion and degradation, stripping the land of vital nutrients and reducing its ability to support future growth. Heli-logging on the other hand minimizes damage to the forest floor and surrounding ecosystems by eliminating the need for road construction and heavy ground-based machinery, preserving soil integrity and reducing habitat disruption. Hovering aircrafts can reach steep, remote, or otherwise inaccessible areas where traditional logging methods would be difficult or impossible, allowing selective harvesting in challenging terrains.

However, in traditional harvesting it is also required to leave at least a part of the branches and top of the tree at the site of felling, i.e. the tree is de-limbed and/or de-barked on site, to preserve nutrients and the neutralizing agents in the soil. This is a difficult operation to perform through a remote or air based harvesting.

The present disclosure involves a new and innovative harvesting tool which may be used with different types of hovering aircrafts, such as helicopters, UAVs, airships and gyrocopters, and which allows for harvesting of whole trees, while being able to deliver the required replacement of nutrient and/or soil neutralizing agents. The harvesting tool is equipped with two separate and rotatable portions for gripping and transporting the tree, and a cutting the tree, respectively. This allows for the tool to be able to grip and hold the tree at a distance from the cutting tool and therefore provides an efficient way of harvesting whole trees. The harvesting tool is further configured to be positioned adjacent to or juxtaposed to the whole tree without having to de-limb or remove any branches of the tree. The first portion is also configured to be able to grip and hold the whole tree during both the cutting of the tree and during the subsequent transportation of the tree from the site of felling.

### Defintions

A tree generally comprises a root system, a stem, branches and a top portion. In the present disclosure the term tree or whole tree is meant the tree stem or the tree trunk including the top and at least a majority of the major branches of the tree. A tree trunk or tree stem is in contrast a de-limbed tree, i.e. a tree where the top and at least most of the major branches has been removed. By a felled tree, or felled whole tree, is thus meant the entire tree including the top and most of the major branches. By a felled tree stem or tree trunk, or a portion thereof, is in contrast meant a de-limbed tree, i.e. a tree where the top and at least major branches has been removed. A felled tree is therefore a tree which has been cut or severed from its root system, thus leaving a stump at the site of felling. The stump is the part of a tree left in the ground after the trunk has been cut down. In this respect the site of felling is meant the location at which a specific tree has been standing before it was cut or severed from its stump.

A hovering aircraft includes all types of aerial vehicles which are capable of hovering over a specific site. This includes aerial vehicles such as helicopters, drones (or multicopters), airships, hot air balloons, or combinations thereof. The harvesting tool of the present disclosure could also be connected to a so called cable logging or skyline logging system, often used to transport logs from steep or remote areas. By hovering is meant any type of flight mode which allows the aerial vehicle to in principle come to a stand still over a specific site and hold the position. The hovering aerial vehicle may also be adapted such that it can carry a heavy payload, i.e. the herein described harvesting tool, a whole tree (including branches and top portion) and additional devices, also described herein.

By a UAV is meant an Unmanned Aerial Vehicle which is an aircraft that operates without a human pilot onboard. It is remotely controlled by a human operator, autonomously guided by onboard computers, or a combination of both. UAVs are commonly referred to as drones. There are several methods for remotely or automatically controlling a drone or UAV, depending on the level of autonomy required and the complexity of the task. These methods can range from manual remote control using a pilot to fully autonomous systems that operate based on pre-programmed instructions or AI. The most basic form of control where a human operator uses a radio transmitter or remote controller to manually pilot the drone. The controller communicates with the drone via a radio frequency, usually in the 2.4 GHz or 5.8 GHz range. Another way to control the drone is through GPS-based Autonomous Flight (Waypoint Navigation), where the drone is pre-programmed with a GPS-based flight plan that includes a series of waypoints or coordinates. The drone automatically follows the set path and performs specific tasks at each waypoint. The drone may also be controlled through First-Person View (FPV) Control which allows the operator to pilot the drone using a live video feed transmitted from the drone's onboard camera, displayed on goggles or a screen. It may also be possible to use an AI-based Autonomous Control where the drone is equipped with AI and machine learning algorithms can autonomously make decisions during flight based on real-time data, such as obstacle avoidance, terrain mapping, or even responding to changing conditions like weather or moving objects. The drone may also be controlled through pre-programmed Autonomous Flight where the drone can be pre-programmed with specific geofenced areas or restrictions (no-fly zones), preventing them from flying into restricted airspace or dangerous areas.

By nutrient replacement or wood ash return to forests, is meant the environmental practice where ash, a byproduct of biomass combustion (typically from burning wood for energy), is returned to forest ecosystems. This process helps restore nutrients that were originally taken from the forest when trees were harvested. This includes nutrient replenishment. Wood ash contains essential nutrients such as calcium, potassium, magnesium, and phosphorus, which trees need for growth. By spreading the ash, or an equivalent amount of nutrients, back in the forest, these nutrients are replenished, improving soil fertility and helping sustain forest productivity. Forest soils can become acidic due to natural processes or acid rain. The alkaline nature of wood ash helps to neutralize soil acidity, improving conditions for tree growth and overall forest health. Alternatively, acid neutralizing agents may be used instead of wood ash. By replacement nutrients is thus meant either wood ash, or a composition comprising the required nutrients, which may also include acid neutralizing agents. In one example the replacement nutrients may comprise wood ash supplemented by nutrients and/or acid neutralizing agents. In one example, the amount of replacement nutrients may be determined or estimated before harvesting of a specific tree. This may for instance be done through an automated scanning of the specific tree at any time prior to felling thereof, in certain examples also combined with data from soil analysis of the site, to provide the predetermined amount of replacement nutrients necessary to promote re-growth.

Root rot is a fungal disease that affects the roots of plants and trees, causing them to decay. It is typically caused by fungi such as *Phytophthora, Armillaria,* or *Pythium,* which thrive in overly moist or poorly drained soils. Root rot weakens the tree's ability to absorb water and nutrients, eventually leading to wilting, dieback, and in severe cases, the death of the tree. This can be the consequence of prolonged waterlogging or poor drainage. Fungicides specific to root rot pathogens can be applied to limit the spread of the disease, which are so called stump protection agents. These can be applied, for instance through spraying the agents on the freshly cut stump.

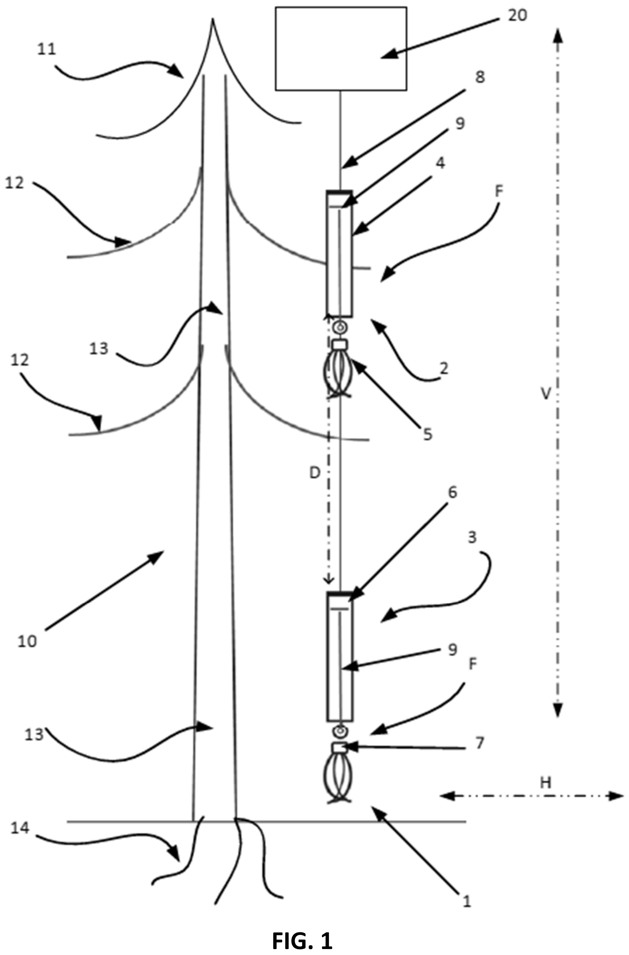

**FIG. 1** illustrates a harvesting tool 1 according to an example. The tool 1 is illustrated hanging from a hovering aerial vehicle 20 and attached to wire 8. The tool 1 is further illustrated as arranged adjacent to a whole tree 10. As described above the whole tree 10 comprises a top portion 11, branches 12, a stem or trunk 13 and a root system 14. The tree 10 is generally directed along a vertical axis V, defining vertical direction extending from the ground to the sky. A horizontal axis H is defined as extending in or at a 90° angle to said vertical axis, and extends substantially along the ground.

As illustrated in Fig. 1 the harvesting tool comprises a first portion 2 and a second portion 3. The first and second portions 2,3 may be connected to each other, or otherwise be operatively coupled to each other. The first and second portions 2, 3 may be attached to a wire 8. The first and second portions 2, 3 may be connected to each other through said to a wire 8, or be operatively coupled to each other through said wire 8. The wire 8 may form part of the tool 1. The wire may be any conventional type of guiding or lifting wire, adapted and suitable for carrying pay loads up to about 1500 kg. The weight of the harvesting tool 1 may be in the range of 150 to 500 kg.

The tool 1 can be lowered and lifted by the aerial vehicle 20, either by adjusting the height of the vehicle 20, or by allowing the wire 8 to move up and down along the vertical axis V from the vehicle. This could for instance be facilitated by a winch connected to the aerial vehicle, which is a motorized drum that winds or unwinds the wire 8 or cable, allowing for precise control of lifting or lowering pay loads. The winch could also be remotely controlled, or automatically controlled.

The tool 1 may be controlled autonomously trough communication with control systems of the hovering aerial vehicle 20, with remote control systems of a base station, or remotely by an operator. The hovering aerial vehicle 20 and the tool 1 may also be controlled separately.

The wire 8 may also comprise, or hold, communication wires and circuitry for connecting or operatively coupling said first and second portion of the tool 1 and/or with the hovering aerial vehicle 20.

The first portion 2 of the tool 1 comprises a first actuator 4 or an actuator portion 4 and a gripping and lifting device 5.

The second portion 3 of the tool 1 comprises a second actuator 6 or actuator portion 6 and a cutting device 7.

In FIG. 1 the first and second portions 2, 3 are illustrated in a first position F. This first position is a position in which the first and second portions 2, 3 are arranged in a substantially vertical direction in relation to the tree 10. The first position F is thus a position where the harvesting tool 1 is in a vertical and closed or furled position. This allows for the tool 1 to be lowered from the aerial vehicle 20 through the branches 12 to assume a correct position juxtaposed to the tree 10. The first and second portions 2, 3 may also be arranged at a distance D from each other. When transporting the tool 1 to the felling site the first and second portions may be arranged such that the distance D is smaller, or such that the portions are physically connected to each other to reduce drag and increase the stability of flight. The tool may also be transported close to or inside the hovering aerial vehicle and be deployed at the site of felling. The distance D between the first portion 2 and second portion 3 of the harvesting tool may be adjusted, or controlled to be adjusted. This means that the tool 1 may be lowered or maneuvered from the hovering aerial vehicle 20 as a unit and when the first portion 2 has reached its gripping position along the stem 13 the first portion is stopped or locked at a gripping position G, and the second portion 3 is further lowered or maneuvered until it reaches a desired cutting position C, where it is stopped or locked.

The gripping position G may be estimated or calculated based on the weight and length of the whole tree 10, and is thus preferably above the center of rotation, or center of gravity, of the tree such that when the tree has been cut it does not fall down but is held substantially in a vertical position by the gripping device 5. This allows for the whole tree 10 to be lifted out from the site of felling.

The gripping position G and the cutting position C may in one example be detected or identified using sensors.

Various sensors can be employed, which help identify, locate, and classify the tree or tree stem before it is gripped or cut. Such sensors may include, but are not limited to proximity sensors, ultrasonic sensors, infrared sensors, vision sensors (e.g. cameras equipped with image processing algorithms), tactile sensors, radar sensors, depth sensors, laser distance sensors. Combining multiple sensors (sensor fusion) can also enhance the overall detection, gripping and cutting performance of the harvesting tool. The sensors may further be configured to provide signals to a control unit, a base station or a control station. The sensors, or signals from the sensors, may also be used to control the operation of the hovering aerial vehicle 20.

The harvesting tool 1 may be controlled by a control unit.

The first and second portions 2, 3 may be controlled by a control unit. In one example the control unit controls the first and second actuators 4, 6 respectively. The actuators may for instance be provided with a respective piston 9, actuating and controlling the movement of the respective gripping and cutting device 5, 7.

In one example the hovering aerial vehicle 20, may be controlled by a control unit. In one example the flight operation of the hovering aerial vehicle 20, may be controlled by a control unit. By flight operation is meant for instance transporting the tool 1 to the site of felling, and after cutting the tree, transporting the tool holding the whole tree from the site of felling to a location where the tree is to be delivered or dropped off.

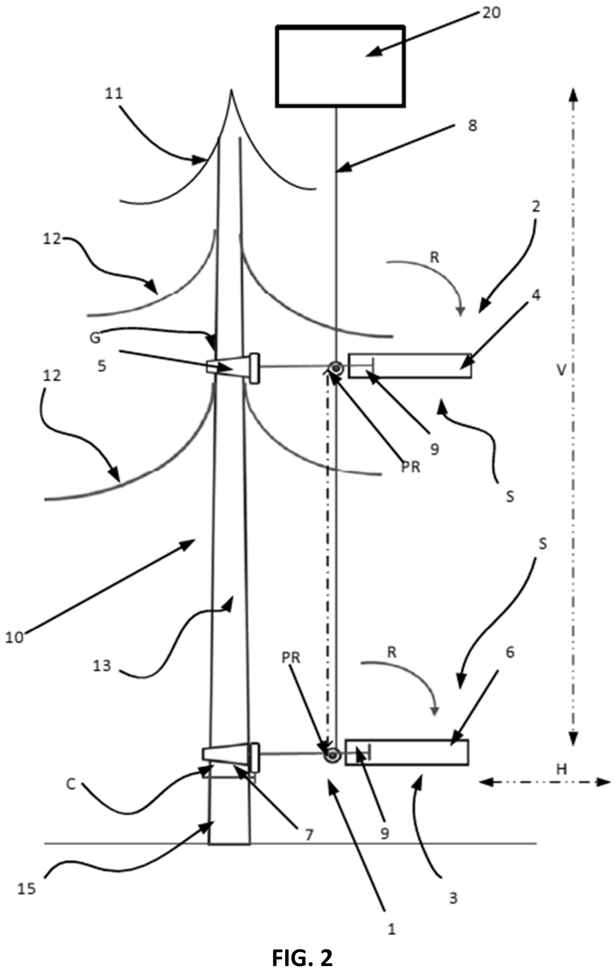

The control unit (not shown in the drawings) may be provided in a computer system. The control unit may be provided with a processing circuitry. The processing circuitry of a computer system may thus be provided to control the harvesting tool 1 and/or the hovering aerial vehicle 20. The control unit may be communicate with the tool 1 and/or the aerial vehicle 20 by any convention methods and equipment including but not limited to any one of radio frequency communication, wi-fi connection, cellular networks, satellite communication, mesh networking, Bluetooth, infra-red communication, ground control stations, first-person view systems and telemetry systems. The control unit may further be configured to receive signals from the sensors through any one of the aforementioned communication methods. **FIG. 2** illustrates a harvesting tool 1 where the first portion 2 is locked at a gripping position G. Once the first portion 2 has reached the gripping position G it is rotated R from the first vertical position (as illustrated in FIG. 1) to a second position S, or a second horizontal position S as illustrated in FIG. 2.

In one example, once the first portion 2 has reached the desired gripping position G the first portion 2 is rotated R in a substantially 90° angle to the vertical axis V, around the point of rotation PR, and the gripping and transporting device 5 is actuated or controlled to grip around the stem 13. The first and second portions 2, 3 may thus be controlled to be rotated through the first and second actuator 4, 6 respectively. The first and second portions 2, 3 may be provided with sensors to determine or detect for instance gripping position and cutting position.

In one example the operation also includes actuating or moving the tool along the horizontal axis H. In one example the actuator portion 4 controls a horizontal movement of the gripping and holding device 5 toward the tree stem 13. This may be performed by pushing the piston 9 towards the stem, thus maneuvering or moving the gripping device in a direction towards the stem.

In one example, the second portion 3 can then be further lowered or maneuvered to the cutting position and controlled or actuated to cut the stem 13. In one example the second actuator 6 controls the cutting device 7 such that it is positioned to cut the tree stem 13. This may include to move the cutting device in a horizontal direction towards the tree stem. This may be performed by pushing the piston 9 towards the stem, thus maneuvering or moving the cutting device in a direction towards the stem

In another example the first portion 2 and the second portion 3 are positioned at their respective gripping position G and cutting position C before the gripping and transporting device 5 is actuated to grip around the stem 13.

According to one example, the first actuator can control the gripping and transporting device 5 such that it its moved in a horizontal direction towards the tree stem 13 and to grip around the tree stem before the cutting operation is actuated by the second actuator 6 and cutting device 7.

The gripping and lifting device is thus configured such that it can grip around the stem portion 13 of the tree 10 and hold or secure the tree during cutting and during the subsequent transporting of the cut tree 10 from the felling site. The gripping and lifting device may in one example be controlled by a control unit.

The cutting device 6 is thus configured such that it can cut or sever a stem 13 from leaving the tree stump 15 standing. The cutting device 6 thus comprises equipment that allows for the stem 13 to be cut. This may include any type of cutting or sawing equipment. Chainsaws are for instance commonly used for cutting down trees of various sizes. The cutting device 6 may in one example be controlled by a control unit.

Optionally, in one example of the present invention (not shown in the drawings), the second portion may also be provided with a gripping portion, such that the tree 10 is further stabilized during the cutting operation. In one example the gripping portion of the cutting device releases its grip of the stem once the cutting operation has been completed. In one example, the gripping portion of the cutting device continues to hold the stem during transport of the tree. This may further increase the stability during transport.

Once the tree 10 has been cut the whole tree 10 may be lifted from the site of felling by operating the hovering aerial vehicle 10 away from the site. The tree 10 may be transported or delivered to a site of processing or storage. The harvesting tool 1 may therefore further be controlled to release the tree at a specific location.

The control unit, or the processing circuitry, may thus be configured calculate or estimate any one of the flight path for the aerial vehicle 20, the gripping position G of the first portion 2, the cutting position C of the second portion 3, the operation of the gripping device 5, the operation of the cutting device 7 and the operation of the first and second actuators 4, 6.

The tool 1 may further be equipped or provided with comprises a device configured for spreading of replacement nutrients, such as wood ash, and/or a device configured for spreading of a stump protection agent.

These devices are not illustrated in the drawings but may be attached to either one of the first and second portions 2, 3. Preferably the device for spreading of stump protection agent is connected to or attached to the second portion 3. This allows for the stump protection agent to be applied to the stump after or during cutting of the stem 13. The stump protection agent may for instance be applied trough a nozzle, or spray nozzle connected to a container for the stump protection agent. The device for spreading nutrients and/or spreading stump protection agent may also be separate from the first and second portion of the tool, an may be deployed from the hovering aerial vehicle 20 after the tree has been lifted from the felling site. The devices for spreading replacement nutrients and/or stump protection agent may in one example include a container and a suitable spreading device. The devices may be controlled by a control unit.

Prior to or simultaneously with removing the tree 10 from the site the device or devices for spreading replacement nutrients and/or stump protection agent may thus be controlled to release an amount of replacement nutrients and/or stump protection agent.

In one example, a specific tree may be identified based on mapping of a forest and saving the mapped trees in a database. The database may thus contain information on the location of a specific tree. The database may also contain information about the type of tree, the length, and the approximate weight of the tree. Such information may be obtained by scanning the forest using sensors and cameras and using calculation algorithms, including AI and deep learning, to determine the characteristics of the tree. This information may also be used to control for instance an aerial vehicle transporting the harvesting tool to a specific tree. The information from the database or scanning may also be used to determine the correct gripping and cutting positions of the tool, and hence be used to control the operation of the tool. This could thus be done either manually by an operator, or automatically.

In one example, the scanning of trees may be used to estimate or calculate the amount of nutrients to be replenished. This means that according to the present invention, the harvesting tool can be provided with an amount of nutrients that is required to preserve or even increase the forest re-growth at the site of felling, i.e. the amount of nutrients to be replenished can be calculated based on the specific tree which is to be harvested. This calculation or estimation could also be based on information regarding the soil and other factors influencing forest growth, such as for instance soil quality, climate conditions (temperature, rainfall, seasonal patterns), spices composition, etc.. These types of estimations or calculations could also be used to determine what specific tree is suitable for harvesting.

The computer system mentioned herein is adapted to execute instructions from a computer-readable medium to perform these and/or any of the functions or processing described herein. The present disclosure or invention thus also includes a computer implemented method. The computer implemented method comprises: controlling the harvesting tool to a position juxtaposed to a tree 10 along a direction parallel to a vertical axis V, by a processing circuitry of a computer system, controlling the first portion 2 of the harvesting tool 1 to a gripping position G, by a processing circuitry of a computer system; controlling the second portion 3 of the harvesting tool 1 to a cutting position C, by a processing circuitry of a computer system; controlling a gripping device 5 of the first portion 2 from a first position F to a second position S, by a processing circuitry of a computer system, controlling a cutting device 7 of the second portion 3 from a first position F to a second position S, by a processing circuitry of a computer system; controlling the gripping device 5 to grip and hold around the stem 13 of the tree 10, by a processing circuitry of a computer system; and controlling the cutting device 7 to cut the stem 13, by a processing circuitry of a computer system. The present invention also includes a computer program product comprising program code for performing, when executed by the processing circuitry, the above mentioned computer implemented method.

The present invention or disclosure also includes a non-transitory computer-readable storage medium comprising instructions, which when executed by the processing circuitry, cause the processing circuitry to perform the computer implemented method above.

The computer system may be connected (e.g., networked) to other machines in a LAN, an intranet, an extranet, or the Internet. While only a single device is illustrated, the computer system may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc. The computer system may comprise at least one computing device or electronic device capable of including firmware, hardware, and/or executing software instructions to implement the functionality described herein. The computer system may include processing circuitry (e.g., processing circuitry including one or more processor devices or control units. The computer system may include at least one computing device having the processing circuitry. The processing circuitry may include any number of hardware components for conducting data or signal processing or for executing computer code. The processing circuitry may further include computer executable code that controls operation of the programmable device. The processing circuitry of the computer system may further perform the same method as described above, i.e. the processing circuitry is configured to perform the same method as the control unit. In one example the control unit includes or utilizes the processing circuitry. The terminology used herein is for the purpose of describing particular aspects only and is not intended to be limiting of the disclosure. In particular, mentioning of in one example does not preclude the combination of different examples, unless this is expressly stated.

As used herein, the singular forms "a," "an," and "the" are intended to include the plural forms as well, unless the context clearly indicates otherwise. As used herein, the term "and/or" includes any and all combinations of one or more of the associated listed items.

It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

Relative terms such as "below" or "above" or "upper" or "lower" or "horizontal" or "vertical" used herein to describe a relationship of one element to another element as illustrated in the Figures. It will be understood that these terms and those discussed above are intended to encompass different orientations of the device in addition to the orientation depicted in the Figures.

## Claims

1. A harvesting tool (1) for harvesting of a whole tree (10), wherein the whole tree is the tree stem or the tree trunk including the top and at least a majority of the major branches of the tree, said tool comprising a first portion (2) and a second portion (3), wherein the first portion (2), when in use, is positioned above the second portion (3) and in relation to a vertical axis (V), and wherein the first portion (2) comprises a first actuator (4) and gripping and lifting device (5), and wherein the second portion (3) comprises a second actuator (6) and a cutting device (7), and wherein said first portion (2) and said second portion (3) are rotatable about a horizontal axis (H) to change orientation relative to the vertical axis (V) from a first position (F) to a second position (S).

2. The harvesting tool (1) of claim 1, wherein said first portion (2) and said second portion (3) are adapted to be controlled to rotate to about 90° from a first vertical position (F) to a second horizontal position (S).

3. The harvesting tool (1) of any of claims 1-2, wherein said first portion (2) and second portion (3) are attached to a wire (8).

4. The harvesting tool (1) of claim 3, wherein said first portion (2) and said second portion (3) are arranged at a distance (D) from each other.

5. The harvesting tool (1) of claim 4, wherein said distance (D) is adjustable.

6. The harvesting tool (1) of any of claims 1-5, wherein said first portion (2) or said second portion (3) further comprises a device configured for spreading of replacement nutrients.

7. The harvesting tool (1) of any of claims 1-6, wherein said second portion (3) further comprises a device configured for spreading of a stump protection agent.

8. A method for harvesting a whole tree (10), comprising:
providing a harvesting tool (1) according to any one of claims 1 to 7,
controlling the harvesting tool (1) to a position juxtaposed to a tree (10) along a direction parallel to a vertical axis (V),
controlling the first portion (2) of the harvesting tool (1) to a gripping position (G);
controlling the second portion (3) of the harvesting tool (1) to a cutting position (C);
controlling a gripping device (5) of the first portion (2) from a first position (F) to a second position (S),
controlling a cutting device (7) of the second portion (3) from a first position (F) to a second position (S);
controlling the gripping device (5) to grip and hold around the stem (13) of the tree (10),
controlling the cutting device (7) to cut the stem (13).

9. The method for harvesting a whole tree (10) of claim 8, further comprising controlling an aerial vehicle (20) to repeatedly:
delivering the harvesting tool (1) to a site of felling;
manoeuvring the harvesting tool (1) to a position juxtaposed to a tree;
transporting the felled tree (10) from the site of felling to a process site.

10. The method for harvesting a whole tree (10) of claims 8-9, further comprising:
spreading any one of replacement nutrients at the site of felling;
applying stump protection agent to a tree stump (15).

11. The method for harvesting a whole tree (10) of claims 9-10, wherein said first portion (2) and said second portion (3) are controlled to rotate to about 90° from the first vertical position (F) to the second horizontal position (S).

12. A system for harvesting a whole tree (10) comprising an aerial vehicle (20), a harvesting tool (1) according to claims 1-7 connected to said aerial vehicle (20) and a control unit configured to control any one of said aerial vehicle (20) and said harvesting tool (1).

13. The system according to claim 12, further comprising further comprising anyone of a device configured for spreading of replacement nutrients and a a device configured for spreading of a stump protection agent, or a combination thereof.
